# FASCICULE DE BREVET EUROPEEN

(11) **EP 3 667 104 B1**
(45) Date de publication et mention de la délivrance du brevet: **22.03.2023**
(21) Numéro de dépôt: 19212694.4
(22) Date de dépôt: 29.11.2019
(51) Int. Cl.: F15B 19/00, G01M 3/28, B60T 17/22

(54) **CIRCUIT D'AIR COMPRIMÉ DE VÉHICULE FERROVIAIRE, ET PROCÉDÉ DE VÉRIFICATION DU FONCTIONNEMENT D'UNE SOUPAPE DE SÉCURITÉ DE CE CIRCUIT**
DRUCKLUFTKREISLAUF EINES SCHIENENFAHRZEUGS UND VERFAHREN ZUR ÜBERPRÜFUNG DES BETRIEBS EINES SICHEREITSVENTILS DIESES KREISLAUFS
COMPRESSED AIR CIRCUIT FOR RAILWAY VEHICLES, AND METHOD FOR CHECKING THE OPERATION OF A SAFETY VALVE OF THIS CIRCUIT

(30) Priorité: 30.11.2018 FR 1872161
(43) Date de publication de la demande: 17.06.2020
(73) Titulaire: ALSTOM Transport Technologies, 93400 Saint-Ouen (FR)
(72) Inventeur: KAMENOVA, Lora, 59300 VALENCIENNES (FR); VANGERMEE, Loic, 59790 RONCHIN (FR); BULOT, Olivier, 59178 BRILLON (FR); MALENGE, Julien, 59300 VALENCIENNES (FR)
(74) Mandataire: Lavoix

(56) Documents cités:
- DE-A1- 3 000 545
- US-A- 2 178 901
- US-A1- 2011 179 853

## Description

La présente invention concerne un circuit d'air comprimé pour véhicule ferroviaire.

Un tel circuit d'air comprimé pour véhicule ferroviaire comporte un réseau pneumatique destiné à être embarqué sur le véhicule ferroviaire, et au moins une soupape de sécurité

La soupape de sécurité est destinée à évacuer l'air comprimé en cas de surpression dangereuse dans le circuit d'air comprimé.

Le bon fonctionnement d'une telle soupape est régulièrement vérifié. En particulier, l'ouverture de la soupape est vérifiée.

A cet effet, on connait déjà dans l'état de la technique un procédé de vérification du fonctionnement de la soupape de sécurité, nécessitant le démontage de cette soupape de sécurité, pour l'adapter sur un banc d'essai spécifique. Ce démontage/remontage est une opération longue et coûteuse, qui doit en outre être multiplié par le nombre de soupape sur le véhicule ferroviaire par exemple onze soupapes sur un train de type MP14 à huit voitures.

DE 30 00 545 A décrit également un exemple de circuit d'air comprimé connu.

L'invention a notamment pour but de remédier à l'inconvénient précité, en proposant un circuit d'air comprimé dont la maintenance des soupapes de sécurité peut être effectuée directement sur le véhicule ferroviaire, sans nécessiter de démontage de ces soupapes.

A cet effet, l'invention a notamment pour objet un circuit d'air comprimé pour véhicule ferroviaire selon la revendication 1.

Grâce à la prise de raccordement, il est possible de connecter à la soupape un réseau pneumatique secondaire, dédié à la vérification de cette soupape, en court-circuitant le réseau pneumatique principal.

Il suffit alors d'injecter de l'air sous une pression prédéterminée, pour vérifier le bon fonctionnement de la soupape.

Le désassemblage du réseau pneumatique secondaire reconnecte automatiquement la soupape au réseau pneumatique principal. Ainsi, le dispositif selon l'invention permet d'éviter une remise en service du train avec une soupape isolée du réseau pneumatique principal.

Il est à noter que la vérification est effectuée sans démontage du circuit d'air comprimé, donc directement sur le véhicule ferroviaire.

Un circuit d'air comprimé selon l'invention peut comporter en outre l'une ou plusieurs des caractéristiques techniques suivantes, prise seules ou selon toute combinaison techniquement envisageable.
- La prise de raccordement comporte : un obturateur mobile entre une première position d'obturation du passage entre les première et seconde voies, et une seconde position d'obturation du passage entre les première et troisième voies, un organe élastique de rappel de l'obturateur vers sa seconde position, et des moyens pour pousser l'obturateur vers sa première position lorsqu'un élément de connexion complémentaire de la prise est connecté à cette prise.
- La prise de raccordement comporte des moyens de blocage de l'obturateur en seconde position lorsque la pression dans le réseau pneumatique principal est supérieure à un seuil prédéfini.
- La vanne de vérification comporte un couvercle propre à recouvrir la prise de raccordement lorsqu'elle n'est pas utilisée.

L'invention concerne également un procédé de vérification du fonctionnement d'une soupape de sécurité du circuit d'air comprimé tel que défini précédemment, caractérisé en ce qu'il comporte :
- une étape de connexion d'un réseau pneumatique secondaire à la prise de raccordement, connectant ainsi fluidiquement ce réseau pneumatique secondaire avec la soupape de sécurité,
- une étape d'injection d'air, au moyen du réseau pneumatique secondaire, à une pression prédéterminée, et
- une étape de vérification de l'ouverture de la soupape de sécurité.

Un procédé de vérification selon l'invention peut comporter en outre l'une ou plusieurs des caractéristiques techniques suivantes, prise seules ou selon toute combinaison techniquement envisageable.
- Le réseau pneumatique secondaire est portable.
- Le procédé de vérification comporte une étape préalable de vidange du réseau pneumatique principal.

L'invention sera mieux comprise à la lecture de la description qui va suivre, donnée uniquement à titre d'exemple et faite en se référant aux figures annexées, parmi lesquelles :
- [Fig 1] la figure 1 représente schématiquement un circuit d'air comprimé de véhicule ferroviaire selon un exemple de mode de réalisation de l'invention, dans une configuration de fonctionnement normal ; et
- [Fig 2] la figure 2 est une figure similaire à la figure 1, représentant schématiquement le circuit d'air comprime de la figure 1 dans une configuration de vérification.

On a représenté, sur les figures, un circuit d'air comprimé 10 pour un véhicule ferroviaire. Un tel circuit d'air comprimé 10 est destiné à alimenter en air comprimé des freins du véhicule ferroviaire, et/ou tout équipement nécessitant de l'air comprimé.

Le circuit d'air comprimé comporte un réseau pneumatique 12, dit réseau pneumatique principal 12, embarqué sur le véhicule ferroviaire.

Afin d'éviter des surpressions dangereuses dans le circuit d'air comprimé 10, ce circuit d'air comprimé 10 comporte au moins une soupape de sécurité 14 de type classique, destinée à évacuer de l'air lorsque la pression dans le circuit d'air comprimé 10 dépasse une valeur d'ouverture prédéterminée, dépendant de cette soupape de sécurité 14.

La soupape de sécurité 14 est propre à se refermer lorsque la pression dans le circuit d'air comprimé 10 redescend en dessous d'une valeur de fermeture prédéterminée.

Le circuit d'air comprimé 10 selon l'invention comporte une vanne de vérification 16 à trois voies, agencée entre le réseau pneumatique principal 12 et la soupape de sécurité 14.

La vanne de vérification 16 présente une première voie 16A reliée à la soupape de sécurité 14, une seconde voie 16B reliée au réseau pneumatique principal 12, et une troisième voie 16C comportant une prise 18 de raccordement à un réseau pneumatique secondaire 20.

Le réseau pneumatique secondaire 20 est portable, par exemple monté sur un chariot adapté, afin de pouvoir aisément être transporté à proximité de la prise 18, qui reste à demeure sur le véhicule ferroviaire.

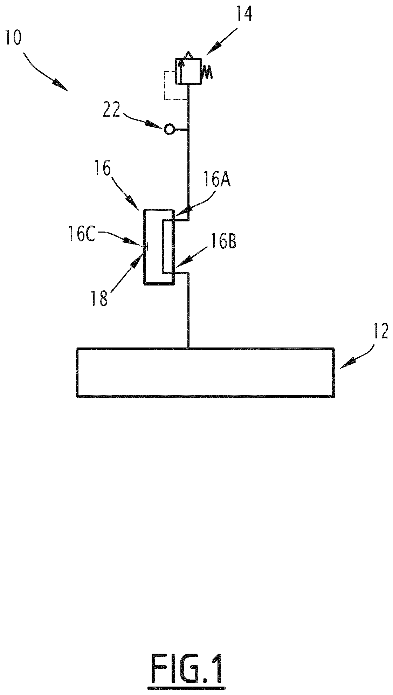

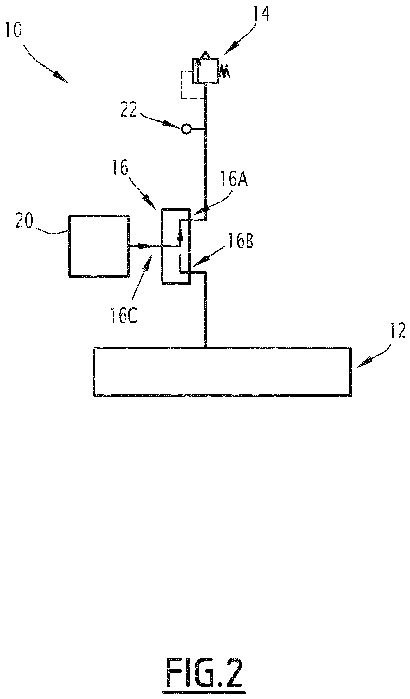

La vanne 16 est conformée pour que sa première voie 16A soit connectée à la troisième voie 16C lorsque la prise de raccordement 18 est connectée au réseau pneumatique secondaire 20, comme cela est représenté sur la figure 2, et pour que sa première voie 16A soit connectée à la seconde voie 16B lorsque la prise de raccordement 18 n'est pas connectée, comme cela est représenté sur la figure 1.

L'homme du métier saura choisir toute vanne à trois voies adaptée à cet effet.

Par exemple, la prise de raccordement 18 est du type comportant un obturateur mobile entre une première position d'obturation du passage entre les première 16A et seconde 16B voies, et une seconde position d'obturation du passage entre les première 16A et troisième 16C voies. Ainsi, dans la première position, la première voie 16A est connectée à la troisième voie 16C, et dans la seconde position, la première voie 16A est connectée à la seconde voie 16B.

La prise de raccordement 18 comporte par ailleurs un organe élastique de rappel de l'obturateur vers sa seconde position, et des moyens pour pousser l'obturateur vers sa première position lorsqu'un élément de connexion complémentaire de la prise 18 est connecté à cette prise 18.

En particulier, l'obturateur peut être poussé par l'élément de connexion complémentaire lorsqu'il est inséré dans la prise 18.

Avantageusement, la prise de raccordement 18 comporte en outre des moyens de blocage de l'obturateur en seconde position lorsque la pression dans le réseau pneumatique principal 12 est supérieure à un seuil prédéfini. Par exemple, le seuil prédéfini est d'un bar, ce qui implique que le réseau pneumatique principal 12 doit être préalablement purgé avant connexion du réseau pneumatique secondaire 20.

Avantageusement, la vanne de vérification 16 comporte en outre un couvercle, propre à recouvrir la prise de raccordement 18 lorsqu'elle n'est pas utilisée. Un tel couvercle permet de protéger la prise de raccordement 18 d'un environnement agressif.

De préférence, le circuit d'air comprimé 10 comporte par ailleurs une prise 22 de mesure de pression, agencée entre la vanne de vérification 16 et la soupape de sécurité 14. Cette prise de mesure 22 est propre à être raccordée à des moyens de mesure de pression, notamment un manomètre numérique, afin de mesurer notamment les seuils d'ouverture et de fermeture de la soupape de sécurité 14.

Un procédé de vérification du fonctionnement de la soupape de sécurité 14 va maintenant être décrit.

Le procédé de vérification comporte une étape préalable de vidange du réseau pneumatique principal 12, afin d'amener la pression y régnant à une valeur inférieure ou égale audit seuil prédéfini, notamment à la pression atmosphérique. A cet effet, on utilise des robinets de purge que comporte classiquement le réseau pneumatique principal 12.

Le procédé de vérification comporte ensuite une étape de connexion du réseau pneumatique secondaire 20 à la prise de raccordement 18.

Du fait des moyens de blocage, cette connexion n'est possible dans le mode de réalisation décrit qu'après l'étape préalable de vidange.

En effectuant cette connexion, la vanne 16 connecte la première voie 16A à la troisième voie 16B, obturant la troisième voie 16C. On connecte ainsi fluidiquement le réseau pneumatique secondaire 20 avec la soupape de sécurité 14.

Le procédé de vérification comporte ensuite une étape d'injection d'air, au moyen du réseau pneumatique secondaire 20, à une pression prédéterminée.

Le procédé comporte ensuite une étape de vérification de l'ouverture de la soupape de sécurité 14, en réponse à l'injection d'air à la pression prédéterminée.

Après l'ouverture, le réseau pneumatique secondaire 20 est désactivé, de sorte que la pression redescend, jusqu'à la fermeture de la soupape 14.

Avantageusement, le procédé comporte parallèlement une étape de mesure de la pression au niveau de la prise de mesure 22, et de détection de seuils d'ouverture et de fermeture de la soupape 14.

On notera que l'invention n'est pas limitée au mode de réalisation précédemment décrit, mais pourrait présenter diverses variantes sans sortir du cadre des revendications.

## Revendications

1. Circuit d'air comprimé (10) pour véhicule ferroviaire, comportant un réseau pneumatique principal (12) destiné à être embarqué sur le véhicule ferroviaire, et comprenant au moins une soupape de sécurité (14), le circuit d'air comprimé (10) comportant une vanne de vérification (16) à trois voies, dont une première voie (16A) est reliée à la soupape de sécurité (14), une seconde voie (16B) est reliée au réseau pneumatique principal (12), et une troisième voie (16C) comporte une prise (18) de raccordement à un réseau pneumatique secondaire (20), la vanne (16) étant conformée pour que sa première voie (16A) soit connectée à la troisième voie (16C) lorsque la prise de raccordement (18) est connectée au réseau pneumatique secondaire (20), et pour que sa première voie (16A) soit connectée à la seconde voie (16B) lorsque la prise de raccordement (18) n'est pas connectée, **caractérisé en ce que** le circuit d'air comprimé (10) comprend une prise de mesure de pression (22) agencée entre la vanne de vérification (16) et la soupape de sécurité (14).

2. Circuit d'air comprimé (10) selon la revendication 1, dans lequel la prise de raccordement (18) comporte :
- un obturateur mobile entre une première position d'obturation du passage entre les première (16A) et seconde (16B) voies, et une seconde position d'obturation du passage entre les première (16A) et troisième (16C) voies,
- un organe élastique de rappel de l'obturateur vers sa seconde position, et
- des moyens pour pousser l'obturateur vers sa première position lorsqu'un élément de connexion complémentaire de la prise (18) est connecté à cette prise (18).

3. Circuit d'air comprimé (10) selon la revendication 2, dans lequel la prise de raccordement (18) comporte des moyens de blocage de l'obturateur en seconde position lorsque la pression dans le réseau pneumatique principal (12) est supérieure à un seuil prédéfini.

4. Circuit d'air comprimé (10) selon l'une quelconque des revendications précédentes, dans lequel la vanne de vérification (16) comporte un couvercle propre à recouvrir la prise de raccordement (18) lorsqu'elle n'est pas utilisée.

5. Procédé de vérification du fonctionnement d'une soupape de sécurité (14) du circuit d'air comprimé (10) selon l'une quelconque des revendications précédentes, **caractérisé en ce qu'**il comporte :
- une étape de connexion d'un réseau pneumatique secondaire (20) à la prise de raccordement (18), connectant ainsi fluidiquement ce réseau pneumatique secondaire (20) avec la soupape de sécurité (14),
- une étape d'injection d'air, au moyen du réseau pneumatique secondaire (20), à une pression prédéterminée, et
- une étape de vérification de l'ouverture de la soupape de sécurité (14),
- une étape de mesure de la pression de l'air entre la vanne (16) et la soupape (14), et de détection de seuils d'ouverture et de fermeture de la soupape (14).

6. Procédé de vérification selon la revendication 5, dans lequel le réseau pneumatique secondaire (20) est portable.

7. Procédé de vérification selon l'une quelconque des revendications 5 à 6, comportant une étape préalable de vidange du réseau pneumatique principal (12).

## Patentansprüche

1. Druckluftkreis (10) für Schienenfahrzeug, umfassend
ein Hauptpneumatiknetz (12), das dazu bestimmt ist, an Bord des Schienenfahrzeugs zu sein, und umfassend mindestens ein Sicherheitsventil (14), der Druckluftkreis (10) umfassend ein Drei-Wege-Prüfventil (16), wovon ein erster Weg (16A) mit dem Sicherheitsventil (14) verbunden ist, ein zweiter Weg (16B) mit dem Hauptpneumatiknetz (12) verbunden ist und ein dritter Weg (16C) eine Anschlussbuchse (18) für ein sekundäres Pneumatiknetz (20) aufweist, wobei das Ventil (16) geformt ist, sodass sein erster Weg (16A) mit dem dritten Weg (16C) verbunden ist, wenn die Anschlussbuchse (18) mit dem sekundären Pneumatinetz (20) verbunden ist, und dass sein erster Weg (16A) mit dem zweiten Weg (16B) verbunden ist, wenn die Anschlussbuchse (18) nicht verbunden ist, **dadurch gekennzeichnet, dass** der Druckluftkreis (10) eine Druckmessbuchse (22) umfasst, die zwischen dem Prüfventil (16) und dem Sicherheitsventil (14) angeordnet ist.

2. Druckluftkreis (10) nach Anspruch 1, wobei die Anschlussbuchse (18) Folgendes umfasst:
- einen Verschluss, der zwischen einer ersten Position, in der er den Durchgang zwischen dem ersten (16A) und dem zweiten (16B) Weg verschließt, und einer zweiten Position, in der er den Durchgang zwischen dem ersten (16A) und dem dritten (16C) Weg verschließt, beweglich ist,
- ein elastisches Rückholorgan des Verschlusses in seine zweite Position, und
- Einrichtungen, um den Verschluss in seine erste Position zu drücken, wenn ein komplementäres Verbindungselement der Buchse (18) mit dieser Buchse (18) verbunden wird.

3. Druckluftkreis (10) nach Anspruch 2, wobei die Anschlussbuchse (18) Einrichtungen zum Blockieren des Verschlusses in der zweiten Position umfasst, wenn der Druck in dem Pneumatikhauptnetz (12) größer als ein vordefinierter Schwellenwert ist.

4. Druckluftkreis (10) nach einem der vorherigen Ansprüche, wobei das Prüfventil (16) eine Abdeckung aufweist, die geeignet ist, um die Anschlussbuchse (18) abzudecken, wenn sie nicht verwendet wird.

5. Prüfverfahren der Funktion eines Sicherheitsventils (14) des Druckluftkreises (10) nach einem der vorherigen Ansprüche, **dadurch gekennzeichnet, dass** es Folgendes umfasst:
- einen Schritt eines Verbindens eines sekundären Pneumatiknetzes (20) mit der Anschlussbuchse (18), wodurch dieses sekundäre Pneumatiknetz (20) fluidisch mit dem Sicherheitsventil (14) verbunden wird,
- einen Schritt eines Einblasens von Luft mittels des sekundären Pneumatiknetzes (20) mit einem vorbestimmten Druck, und
- einen Prüfschritt des Öffnens des Sicherheitsventils (14),
- einen Schritt eines Messens des Luftdrucks zwischen dem Ventil (16) und dem Ventil (14) und eines Erfassens von Schwellenwerten des Öffnens und Schließens des Ventils (14).

6. Prüfverfahren nach Anspruch 5, wobei das sekundäre Pneumatiknetz (20) tragbar ist.

7. Prüfverfahren nach einem der Ansprüche 5 bis 6,:
umfassend einen vorherigen Schritt eines Leerens des Pneumatikhauptnetzes (12).

## Claims

1. Compressed air circuit (10) for a rail
vehicle, comprising a main pneumatic
network
(12) intended to be carried on the railway vehicle, and comprising at least one safety valve (14), the compressed air circuit (10) comprising a three-way check valve (16), of which a first way (16A) is connected to the safety valve (14), a second way (16B) is connected to the main pneumatic network (12), and a third way (16C) comprises a connection socket (18) for connection to a secondary pneumatic network (20), the valve (16) being shaped so that its first path (16A) is connected to the third path (16C) when the connection socket (18) is connected to the secondary pneumatic network (20), and so that its first path (16A) is connected to the second path (16B) when the connection socket (18) is not connected, **characterised in that** the compressed air circuit (10) comprises a pressure measurement socket (22) arranged between the check valve (16) and the safety valve (14).

2. The compressed air circuit (10) according to claim 1, wherein the connection socket (18) comprises:
- a shutter movable between a first position closing the passage between the first (16A) and second (16B) lanes, and a second position closing the passage between the first (16A) and third (16C) lanes,
- an elastic component for returning the shutter to its second position, and
- means for pushing the shutter to its first position when an additional connection element of the socket (18) is connected to the socket (18).

3. A compressed air circuit (10) according to claim 2, wherein the connection socket (18) comprises means for blocking the shutter in a second position when the pressure in the main pneumatic network (12) is above a predefined threshold.

4. A compressed air circuit (10) according to any one of the preceding claims, wherein the check valve (16) has a cover suitable for covering the connection socket (18) when not in use.

5. A method of checking the operation of a safety valve (14) of the compressed air circuit (10) according to any one of the preceding claims, **characterised in that** it comprises:
- a step of connecting a secondary pneumatic network (20) to the connection socket (18), thereby fluidly connecting this secondary pneumatic network (20) with the safety valve (14),
- a step of injecting air, by means of the secondary pneumatic network (20), at a predetermined pressure, and
- a step to check the opening of the safety valve (14),
- a step of measuring the air pressure between the valve (16) and the valve (14), and detecting opening and closing thresholds of the valve (14).

6. The method of verification according to claim 5, wherein the secondary pneumatic network (20) is portable.

7. A method of verification according to any one of the claims 5 to 6,
including a preliminary step of draining the main pneumatic network (12).
